# FASCICULE DE BREVET EUROPEEN

(11) **EP 0 858 875 B1**
(45) Date de publication et mention de la délivrance du brevet: **22.05.2002**
(21) Numéro de dépôt: 98101881.5
(22) Date de dépôt: 04.02.1998
(51) Int. Cl.: B29C 33/42, B29D 30/06, B60C 11/00

(54) **Procédé de fabrication d'une bande de roulement pour pneus et moule utilisé dans la méthode**
Verfahren zur Herstellung einer Reifenlauffläche und Formwerkzeug zur Durchführung des Verfahrens
Method of manufacturing a tyre tread and mould to be used in this method

(30) Priorité: 12.02.1997 FR 9701847
(43) Date de publication de la demande: 19.08.1998
(73) Titulaire: Compagnie Générale des Etablissements MICHELIN-MICHELIN & CIE, 63040 Clermont-Ferrand Cedex 09 (FR)
(72) Inventeur: Merino Lopez, Jose, 63200 Riom (FR); Garnier De Labareyre, Bertrand, 63400 Chamalieres (FR)
(74) Mandataire: Diernaz, Christian

(56) Documents cités:
- DE-A- 4 403 662
- GB-A- 515 129
- GB-A- 1 166 182
- US-A- 2 661 041
- US-A- 5 022 448
- PATENT ABSTRACTS OF JAPAN vol. 018, no. 192 (M-1587), 4 avril 1994 & JP 06 001114 A (TOYO TIRE & RUBBER CO LTD), 11 janvier 1994,

## Description

L'invention concerne un moule de fabrication d'une bande de gomme vulcanisée pourvue de motifs de sculpture; elle concerne aussi un procédé de fabrication d'une bande de roulement prévulcanisée et prémoulée pour un pneumatique.

Pour obtenir un pneumatique offrant des conditions optimales de sécurité en roulage et de durée de vie en usure, il est connu de pourvoir ledit pneumatique d'une bande de roulement présentant une surface de roulement destinée à être en contact avec la route. En outre, si l'on désire maintenir de bonnes performances sur un sol mouillé, il est connu de pourvoir ladite bande de roulement avec une sculpture formée d'éléments de gomme (nervures et ou des blocs) séparés les uns des autres par des découpures selon une répartition appropriée. De cette façon on réalise sur la surface de roulement de ladite bande une pluralité d'arêtes de gomme et dans le même temps une pluralité de canaux pour drainer l'eau présente par temps de pluie. Les arêtes de gomme sont destinées à couper la couche d'eau sur la route et assurer un contact réel entre le pneumatique et ladite route.

Parmi les découpures, on distingue les rainures et les incisions, ces dernières ayant des largeurs sensiblement plus petites que les rainures et pouvant se refermer sous des conditions normales de roulage. Par largeur d'une découpure, on entend la distance moyenne qui sépare les parois des éléments de gomme situés de part et d'autre de ladite découpure.

Pour obtenir une bonne performance sur sol mouillé, les rainures doivent avoir des largeurs suffisantes pour permettre une évacuation du liquide présent à la surface du sol quelque soit le stade de l'usure de ladite bande.

La performance d'une sculpture d'une bande de roulement doit être suffisamment constante malgré l'usure de ladite bande pour assurer la pérennité du pneumatique; en conséquence, il est nécessaire de prévoir des découpures ayant des profondeurs relativement grandes pour être présentes pendant la plus grande partie de la durée de vie du pneumatique compte tenu de l'usure régulière de sa bande de roulement.

On voit qu'une augmentation de la performance sur sol mouillé impose la présence d'un très grand nombre de découpures formant un grand nombre d'arêtes actives dans l'empreinte du pneumatique avec la route et qu'en même temps ces découpures doivent être suffisamment profondes pour assurer une pérennité satisfaisante au pneumatique. Un tel objectif est très difficile à atteindre par le fait que plus le nombre de découpures est grand et plus la rigidité de la bande de roulement dans l'empreinte sous les efforts d'écrasement et les efforts de cisaillement est affectée; à partir d'un certain seuil, il n'est plus possible d'augmenter les performances d'adhérence, la perte de rigidité de ladite bande devenant le paramètre d'ordre un conduisant à une diminution sensible de la performance.

Toutefois, lors d'un roulage sur sol sec ou mouillé, il se produit des mouvements d'ouverture et de fermeture des découpures orientées principalement dans la direction transversale. En entrée de la zone de contact du pneumatique avec le sol, ces mouvements proviennent d'une forte flexion de la bande de roulement résultant du raccordement géométrique de la partie de ladite bande située à l'extérieur du contact et de la partie de la bande déjà située dans la zone de contact. Cette zone de raccordement est caractérisée géométriquement par un petit rayon de courbure qui oblige les découpures transversales à s'ouvrir, c'est à dire que la largeur desdites découpures à la surface de la bande de roulement augmente de façon sensible. Ces mouvements d'ouverture sont suivis dans la zone de contact du pneumatique avec le sol de mouvements inverses tendant à la fermeture des découpures.

Ces différents mouvements sont la cause d'usures irrégulières, c'est à dire d'usures localisées sur certaines parties seulement de la bande de roulement, réduisant la durée de vie du pneumatique au point d'imposer le remplacement dudit pneumatique plus tôt que prévu.

Un phénomène semblable se produit avec les découpures orientées dans la direction circonférentielle lorsqu'elles sont situées dans la zone du pneumatique affectée par le contact avec la route et soumises à des efforts transversaux, par exemple dans une manoeuvre de virage. Dans cette manoeuvre, un pneumatique est soumis à des efforts transversaux qui agissent sur les éléments constituant la sculpture et provoquent ouverture et/ou fermeture des découpures orientées dans des directions voisines de la direction circonférentielle du pneumatique, perpendiculaire à la direction des efforts.

Il faut aussi mentionner l'existence de mouvements de cisaillement entre les parois en vis-à-vis de deux éléments voisins de la sculpture d'une bande de roulement qui peuvent, dans des conditions sévères de roulage, faire apparaître des fissures en fond de rainure et/ou incision.

Pour tenter de résoudre en partie ces problèmes, le brevet US **2,661,041** divulgue une sculpture pourvue d'une pluralité de rainures orientées circonférentiellement et délimitant une pluralité de nervures continues. Sur certaines parois radiales desdites nervures sont formées, pendant le moulage, une pluralité de protubérances de gomme régulièrement espacées les unes des autres dans le sens circonférentiel et dont le rôle est uniquement d'empêcher la fermeture desdites découpures dans la zone de contact sous l'action d'efforts transversaux. Il n'en demeure pas moins que cette sculpture ne peut empêcher l'écartement des parois d'une même découpure.

Dans le brevet US **5,022,448,** et en vue d'améliorer la performance d'un pneumatique en usure, il est proposé de former, dans les rainures d'orientation transversale, un pont unique reliant les faces opposées de deux blocs voisins de façon à réduire la possibilité de mouvement relatif en augmentant la rigidité. Dans ce dernier cas, il est proposé un procédé de fabrication consistant à mouler le pneumatique avec sa bande de roulement pourvue de sa sculpture et à venir ensuite usiner ladite sculpture pour réaliser un pont de gomme. On constate que procédé d'obtention est relativement coûteux en temps et en moyen puisqu'il exige une reprise pour usinage de chaque pneumatique moulé et vulcanisé. De plus, ce procédé est très délicat à mettre en oeuvre dans la partie médiane de la bande de roulement ainsi que dans le cas d'incision de largeur très petite dès lors qu'il est nécessaire d'introduire un outil à l'intérieur de ladite incision.

Les procédés habituels de moulage ne permettent pas de mouler des découpures dans une bande de gomme, lesdites découpures comportant au moins un pont de liaison de gomme entre les éléments de sculpture de part et d'autre de la découpure; en effet, les moules usuels comportent une surface de moulage sur laquelle fait saillie au moins un élément moulant qui pénètre dans la gomme pour mouler une découpure. Il est implicite que si cet élément moulant comporte au moins un orifice pour mouler un pont de gomme entre les parois de la découpure, il n'est pas possible de démouler ledit élément moulant sans découper le pont de gomme.

Afin de résoudre ce problème, il est proposé un moule destiné au moulage d'une bande de gomme comportant au moins une découpure traversant la totalité de l'épaisseur de ladite bande, ladite découpure séparant au moins deux éléments de sculpture. Le moule selon l'invention comporte une première matrice et une deuxième matrice pourvues chacune d'une surface de moulage, lesdites matrices, lorsque le moule est en position de fermeture, délimitant un volume interne de moulage équivalent au volume de la bande de gomme. Chaque matrice comporte au moins un élément moulant faisant saillie sur sa propre surface de moulage et destiné à former dans la bande de gomme au moins une découpure. Chaque élément moulant est pourvu de parois latérales et d'extrémité; lesdites parois latérales étant des parois présentant, avec la matrice portant ledit élément moulant, une intersection dont le contour représente le contour de la découpure à la surface de la bande de gomme après moulage, la paroi d'extrémité joignant les parois latérales entre elles, à l'extérieur par rapport à la surface de moulage de la matrice portant ledit élément moulant.

Chaque matrice peut être déplacée dans une direction qui lui est propre et qui correspond à sa direction de moulage et de démoulage, les éléments moulants de chaque matrice étant orientés principalement de façon à pouvoir être démoulés suivant lesdites directions.

Le moule selon l'invention est caractérisé en ce que dans la position de fermeture du moule, une paroi d'au moins un élément moulant de la première matrice est en contact avec une paroi d'un élément moulant de la deuxième matrice suivant une surface de contact commune auxdits éléments de façon à constituer un élément moulant continu s'étendant de la surface de moulage de la première matrice jusqu'à la surface de moulage de la deuxième matrice pour mouler une découpure traversant entièrement la bande de gomme, et en ce que les géométries des parois d'extrémité desdits éléments moulants sont fonctionnellement adaptées pour former au moins un orifice permettant le passage de la gomme dans ledit orifice pendant le moulage de la bande.

Le moule selon l'invention permet de mouler et de démouler sans difficulté une bande de gomme dans laquelle au moins une découpure est réalisée et dans laquelle est formé au moins un pont de gomme assurant la liaison entre les parois de ladite découpure.

Par fonctionnellement adaptées, on entend que les formes des parois d'extrémité sont telles qu'au moins un orifice est créé pour le moulage d'un pont de liaison et que lesdites formes permettent un démoulage sans détruire le pont de gomme ainsi formé.

Il est aussi proposé une méthode de fabrication d'une bande de roulement destinée soit à la fabrication d'un pneumatique neuf soit au rechapage d'un pneumatique usagé, ladite bande de roulement étant pourvue d'une sculpture formée d'éléments de gomme délimités par des découpures réalisées pendant le moulage de ladite bande, au moins une découpure traversant totalement ladite bande comporte au moins un pont de gomme de façon à empêcher l'ouverture et la fermeture de la découpure séparant lesdits deux éléments.

La méthode de fabrication d'une telle bande comprend la fabrication d'une bande prémoulée et prévulcanisée selon les étapes suivantes :
- on réalise un moule pour mouler une bande en au moins un mélange de caoutchouc, ledit moule comportant deux matrices, une première matrice et une deuxième matrice, chaque matrice du moule comportant une surface de moulage sur laquelle font saillie une pluralité d'éléments moulants destinés à mouler des découpures dans la bande et lesdites surfaces de moulage délimitant, lorsque le moule est fermé, un volume de moulage égal au volume de la bande de gomme à mouler;
- on réalise un élément moulant en deux parties pour mouler la découpure traversant en totalité la bande de gomme et comportant au moins un pont de gomme, la première partie étant fixée à la première matrice du moule et la seconde partie étant fixée à la deuxième matrice du moule, lesdites parties étant pourvues de parois latérales et d'extrémité et étant telles qu'en position de moulage, c'est à dire le moule étant fermé, elles sont en contact selon une surface commune pour former l'élément moulant la découpure traversant en totalité la bande de gomme et en ce que leurs parois d'extrémité sont fonctionnellement adaptées pour former au moins un orifice dans ledit élément moulant de manière à permettre le passage du mélange de part et d'autre dudit élément pendant le moulage.
- on prépare une quantité appropriée de mélange de caoutchouc pour faire une bande et on place cette quantité entre les deux matrices du moule avant de procéder au moulage de ladite bande par rapprochement desdites deux matrices jusqu'à la position de contact des éléments moulant chaque découpure traversant la bande de part en part;
- on vulcanise la bande de gomme;
- on démoule la bande après vulcanisation en écartant l'une de l'autre les deux matrices de moule qui entraînent avec elles les éléments moulants qui leurs sont associées.

Pour réaliser alors une bande de roulement d'un pneumatique, cette bande de gomme prévulcanisée peut ensuite être disposée sur la partie radialement à l'extérieur d'une ébauche de pneumatique vulcanisée ou non vulcanisée. Dans le cas où l'ébauche de pneumatique est déjà vulcanisée, on interpose, entre ladite ébauche et la bande de roulement, une gomme de liaison non vulcanisée d'épaisseur faible avant de procéder à l'assemblage du pneumatique et à la vulcanisation de la gomme de liaison.

Une bande de gomme prévulcanisée et prémoulée obtenue dans un moule selon l'invention peut aussi servir de bande de roulement pour le rechapage d'un pneumatique : après avoir préparé la surface radialement à l'extérieur de la bande de roulement usée dudit pneumatique, on place une bande de gomme servant de liaison entre la gomme vulcanisée du pneumatique et la bande de gomme prévulcanisée et prémoulée, avant de terminer l'assemblage par la vulcanisation de la gomme de liaison tout en exerçant une pression sur la bande de gomme de façon à l'appliquer fermement contre le pneumatique.

Par rechapage, on entend tout procédé de fabrication d'un pneumatique selon lequel tout ou partie de la bande de roulement d'un pneumatique est remplacée après usure par une nouvelle bande de roulement prévulcanisée et prémoulée.

Il est judicieux d'adapter en le réduisant le temps de vulcanisation de la bande de gomme prévulcanisée de façon à éviter une vulcanisation excessive de la gomme après mise en place sur le pneumatique et vulcanisation de la gomme de liaison.

Que ce soit pour la réalisation d'un pneumatique neuf ou d'un pneumatique rechapé, la bande de gomme selon l'invention peut être assemblée ou pré-assemblée avec une autre bande de gomme de nature identique ou bien de nature différente adaptée tout particulièrement au roulage lorsque la bande de roulement est en partie usée.

En outre, au voisinage de chaque découpure traversant la totalité de la bande de gomme, il a été constaté des mouvements de la gomme de liaison, cette dernière tendant à être aspirée dans ladite découpure réduit d'autant le volume de ladite découpure. Pour pallier cet inconvénient, il est avantageux que la bande de gomme de liaison comporte au moins une armature de renforcement rigidifiant ladite bande dans son plan, c'est à dire essentiellement dans la direction transversale et la direction circonférentielle sur le pneumatique. Une telle armature de renforcement peut être obtenue en employant un tissu croisé composé de fils textiles, par exemple en Nylon ou en polyester. Pendant la vulcanisation de la bande de gomme de liaison, cette armature s'oppose à la déformation de ladite bande et permet de conserver intacte chaque découpure débouchant du côté de la gomme de liaison.

Un tel procédé permet de réaliser des sculptures de bande de roulement dans lesquelles certains éléments de gomme, voire tous, sont reliés les uns aux autres par des ponts de gomme disposés dans les découpures et de manière à créer un couplage mécanique entre les éléments voisins; ce procédé offre la possibilité de réaliser des ponts de liaison de section transversale de forme variée dès lors qu'il est possible de les démouler, c'est à dire que l'opération d'ouverture du moule n'entraîne pas la rupture totale desdits ponts de liaison.

L'invention qui vient d'être exposée sera mieux comprise à l'aide des figures suivantes ayant trait à des variantes de réalisation présentées uniquement à titre d'exemples
- la figure **1** représente partiellement un moule selon l'invention pour mouler une bande de gomme, ledit moule étant en position ouverte;
- la figure **2** montre le moule de la figure **1** en position de fermeture;
- la figure **3** représente deux éléments moulants en contact par leurs parois d'extrémité;
- les figures **4** et **5** représentent deux variantes relatives au cas de deux éléments moulants partiellement en contact sur leurs parois latérales;

la figure **6** montre des aménagements relatifs aux surfaces de contact entre deux éléments moulants.
la figure **7** montre une sculpture d'une bande de roulement d'un pneumatique poids lourd réalisée avec une bande de gomme prémoulée et prévulcanisée.
la figure **8** montre une variante d'une sculpture d'une bande de roulement d'un pneumatique poids lourd conforme à l'invention.

Dans le présent exposé, les termes radial et radialement se réfèrent à une direction qui est perpendiculaire à l'axe de rotation du pneumatique; les termes axial, axialement et transversal se réfèrent à une direction parallèle à l'axe de rotation, le terme longitudinal ou circonférentiel se réfère à la plus grande des dimensions de la bande de roulement une fois en place sur le pneumatique. L'empreinte de contact du pneumatique désigne la surface située à l'intérieur du contour formé par l'enveloppe extérieure de tous les points du pneumatique en contact avec le sol.

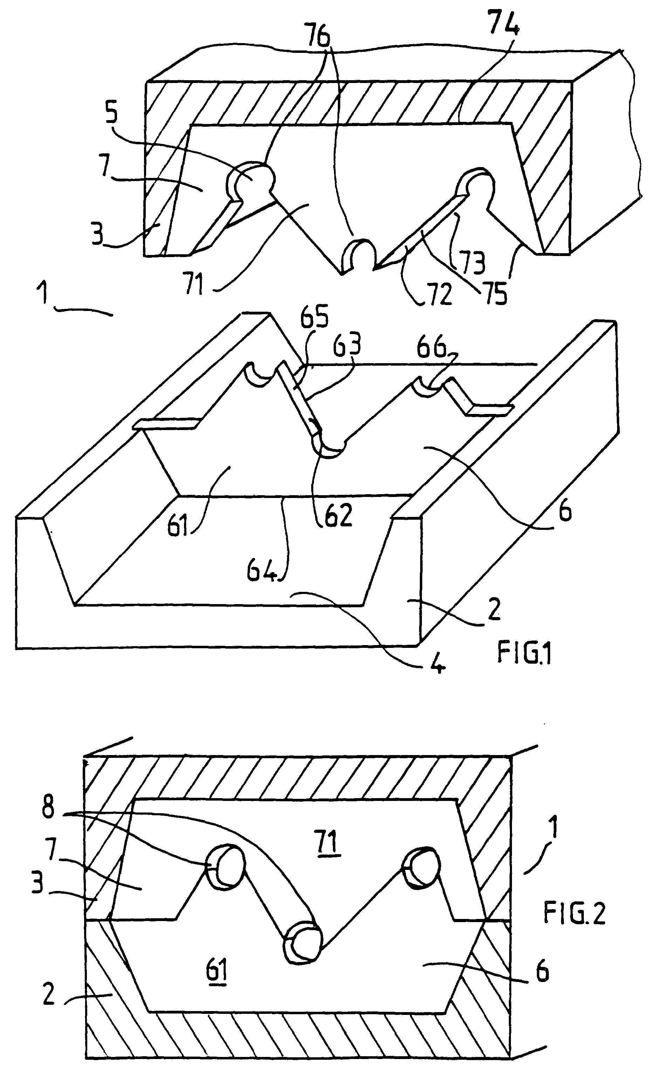

La figure **1** représente partiellement un moule **1** pour mouler une bande de gomme, ledit moule étant constitué de deux parties formant une première matrice **2** et une deuxième matrice **3** destinée à venir en contact l'une sur l'autre lorsque le moule est fermé en position de moulage de ladite bande, comme représenté sur la figure **2** visualisant une coupe transversale du moule **1**. Chaque matrice **2, 3** est pourvue d'une surface de moulage, respectivement **4** et **5** pour mouler les surfaces extérieures de ladite bande; les surfaces de moulage de chaque matrice délimitent, lorsque le moule est fermé, un volume interne de moulage égal au volume de la bande à mouler.

Une lamelle métallique **6** constituant un élément moulant est ancrée dans la matrice **2** de façon à faire saillie sur la surface de moulage **4** de ladite matrice et à être située à l'intérieur du volume destiné à mouler une bande de gomme. Cette lamelle **6** comporte deux parois latérales principales **61** et **63**, parallèles entre elles dans le cas d'espèce et perpendiculaires à la surface de moulage **4** avec laquelle elles présentent une intersection selon un contour **64** délimitant une surface d'intersection de ladite lamelle avec la matrice **2**. A l'opposé de cette surface d'intersection, une paroi d'extrémité **62** joint les parois principales **61** et **63**; cette paroi d'extrémité est composée de parties planes **65** et de parties courbes **66**, lesdites parties courbes **66** formant des sortes d'encoches dans la lamelle **6**.

De même, une lamelle métallique **7** constituant un élément moulant est ancrée dans la deuxième matrice **3** de façon à faire saillie sur la surface de moulage **5** de ladite matrice. Cette lamelle **7** comporte deux parois latérales principales **71** et **73**, parallèles entre elles et perpendiculaires à la surface de moulage **5** avec laquelle elles présentent une intersection selon un contour **74** délimitant une surface d'intersection de ladite lamelle avec la deuxième matrice. A l'opposé de cette surface d'intersection, une paroi d'extrémité **72** joint les parois principales **71** et **73** et est, à l'image de la paroi d'extrémité **62,** composée de parties planes **75** et de parties courbes **76.**

Les lamelles **6** et **7** sont agencées de façon que, lorsque le moule est fermé, elles soient situées dans le prolongement l'une de l'autre et en contact partiellement sur les parties planes **65, 75** de leurs parois d'extrémité **62** et **72**, pour constituer alors une lamelle moulant une découpure traversant la bande de gomme selon toute son épaisseur. Sur chaque lamelle les parties courbes **66, 76** des parois d'extrémité **62** et **72** sont situées en vis-à-vis et délimitent ainsi des orifices **8** (visibles sur la figure **2**) permettant le passage de la gomme pendant le moulage de manière à réaliser trois ponts de gomme entre les parois de la découpure formée par les lamelles **6** et **7**. Dans le cas d'espèce, chaque pont de gomme est entièrement situé à l'intérieur de la bande de gomme.

En outre, il est implicite que chaque matrice du moule peut être pourvue d'au moins un autre élément moulant en relief sur la surface de moulage de ladite matrice pour mouler une découpure ne traversant pas la bande.

Pour des raisons pratiques, chaque matrice peut être constituée d'une pluralité de matrices élémentaires assemblées les unes avec les autres de manière connue en soi; enfin, le moule selon l'invention peut être constitué d'une pluralité de matrices élémentaires pour former deux matrices annulaires concentriques, la première matrice étant placée radialement à l'intérieur de la seconde pour mouler une bande de gomme sous la forme d'une bande annulaire fermée.

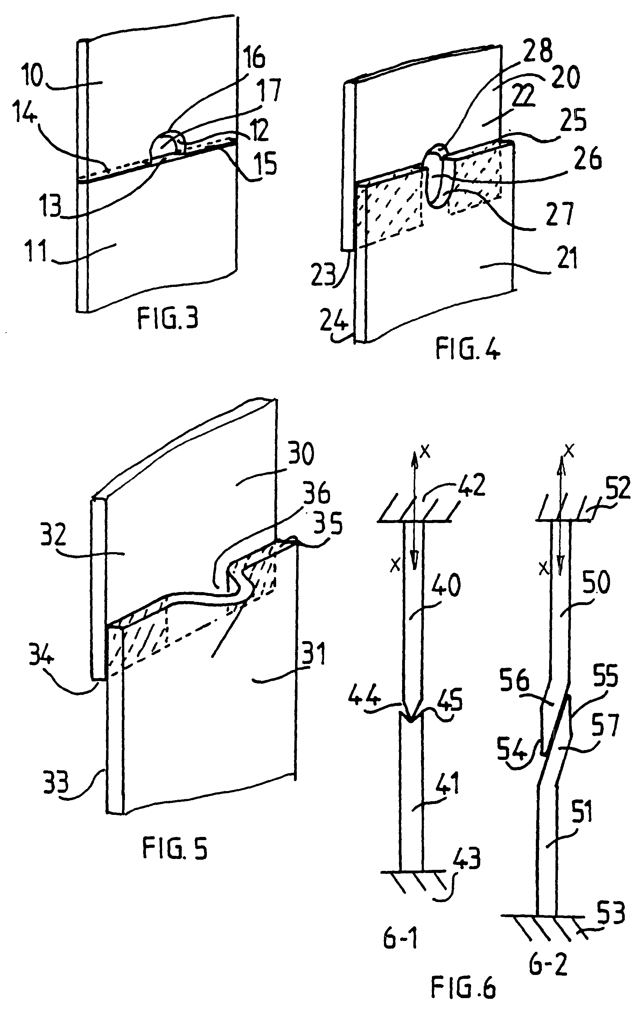

Les figures **3**-**4**-**5** représentent schématiquement des variantes de l'invention permettant de mouler une découpure pourvue d'un pont de gomme de liaison entre les parois de ladite découpure.

La figure **3** montre, en partie seulement, deux lamelles **10** et **11** en contact par leurs parois d'extrémités **12** et **13** selon deux surfaces **14** et **15** séparées l'une de l'autre. La paroi d'extrémité **13** de la lamelle **11** est plane tandis que la paroi d'extrémité **12** de la lamelle **10** est composée de deux parties planes reliées par une partie courbe formant une lumière **16** dans ladite lamelle. Une fois le contact réalisé entre les parois d'extrémité des deux lamelles **10** et **11**, la présence de la lumière **16** en vis-à-vis d'une partie plane de la paroi **13** permet la formation d'un orifice **17** pour le passage de la gomme pendant le moulage.

La figure **4** montre le cas d'une lamelle plane **20** ayant une surface latérale principale **22** en contact au voisinage de sa paroi d'extrémité **23** avec une surface latérale principale **24** d'une deuxième lamelle plane **21**. Les géométries des parois d'extrémité **23, 25** des lamelles **20, 21** sont fonctionnellement adaptées pour former deux surfaces de contact séparées et permettre ainsi la formation d'un orifice **26** pour le passage de la gomme de moulage entre lesdites deux surfaces de contact. Dans le cas d'espèce, la géométrie de chaque paroi d'extrémité **23, 25** est formée de deux parties planes reliées par une partie courbe formant une lumière **27, 28** dans chaque lamelle; lesdites lumières sont en face l'une de l'autre lorsque les lamelles **20** et **21** sont en contact.

La figure **5** représente une variante de la disposition qui vient d'être décrite pour la figure **4**. Dans cette variante, les deux lamelles **30** et **31** en contact par deux de leurs parois latérales **32, 33** ont des parois d'extrémité **34, 35** planes; cependant, il est prévu que le profil de la paroi d'extrémité **35** de la lamelle **31** est localement déformé transversalement par rapport à la surface de contact entre les lamelles **30, 31** lorsqu'elles sont en contact, de façon à créer un passage **36** pour la gomme au moment du moulage, ledit passage **36** étant parallèle ou quasiment parallèle aux parois latérales en contact. En outre, il peut être envisagé de réaliser une mise en forme analogue pour la paroi d'extrémité **34** pour faciliter le passage de la gomme.

L'utilisation d'un moule conforme à l'invention pour mouler une bande de gomme a montré la possibilité de la présence locale d'un voile mince de gomme dans la découpure, ledit voile pouvant obturer temporairement ladite découpure. Ce voile mince se forme aux endroits où les éléments moulants viennent en contact lors de la fermeture dudit moule et cela d'autant plus facilement que les contacts ne sont pas parfaitement réalisés. D'un point de vue performance, il faut noter que lorsque cette bande est utilisée pour confectionner une bande de roulement d'un pneumatique, la présence de ce voile ne présente que peu d'incidence sur ladite performance car en roulage ledit voile se déchire et s'élimine rapidement sous l'action des sollicitations mécaniques.

Il est proposé deux dispositions, visibles sur la figure **6**, permettant d'éviter le plus possible la formation d'un voile de gomme dans les zones de contact entre éléments moulants. La figure **6**-**1** montre une coupe transversale suivant l'épaisseur de deux lamelles **40** et **41** fixées respectivement aux matrices **42, 43** et ayant leurs parois d'extrémité **44** et **45** en contact. Pour assurer un bon contact et en même temps un bon centrage des lamelles **40** et **41** l'une par rapport à l'autre, la paroi d'extrémité **44** de la lamelle **40** a la forme d'un biseau à double pente et la paroi d'extrémité **45** de la lamelle **41** a la forme d'un sillon en V, l'angle du sillon étant supérieur à l'angle du biseau de façon à faciliter l'introduction de la paroi d'extrémité **44** dans le sillon formant la paroi d'extrémité **45** et à créer localement des pressions de contact suffisantes pour éviter la formation d'un voile de gomme ou éventuellement couper celui-ci.

La figure **6**-**2** montre une coupe transversale suivant l'épaisseur de deux lamelles **50** et **51** fixées respectivement aux matrices **52, 53** et ayant deux parois latérales partiellement en contact. Ces deux lamelles **50, 51** présentent au voisinage des parois d'extrémité **54, 55** des portions de parois latérales **56** et **57** obliques par rapport à la direction de fermeture du moule, représentée par la double flèche **XX**, de façon à avoir une pression de contact non nulle entre lesdites deux lamelles. Par direction de fermeture du moule, on entend la direction selon laquelle les matrices constituant le moule sont amenées en contact l'une sur l'autre. En outre, et pour faciliter la pénétration des éléments moulants dans la gomme, les parois d'extrémité **54** et **55** forment un angle plus petit que **90**° avec chacune des parois latérales en contact.

Bien entendu les principes énoncés peuvent s'appliquer avec avantage aux cas de lamelles disposées en oblique par rapport à la surface de moulage, ou bien ayant des formes variées comme par exemple, une forme en zigzag ou encore une forme ondulée dès lors que lesdites formes sont démoulables.

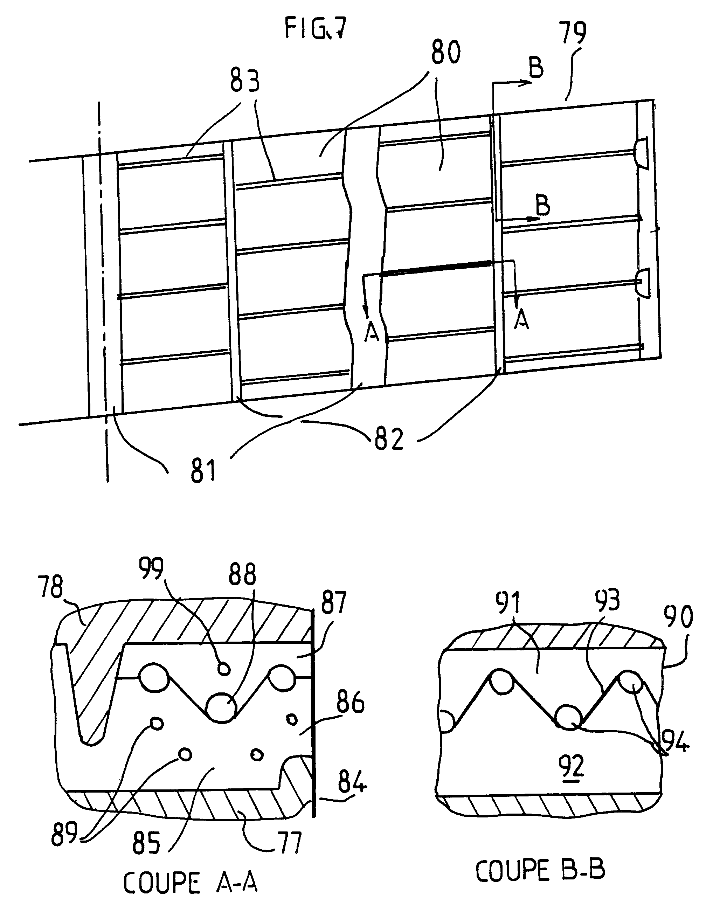

La bande de roulement **79** d'un pneumatique de dimension **315/80** R **22.5,** dont une moitié de la surface de roulement est représentée sur la figure **7**, se compose de huit nervures **80** orientées dans la direction circonférentielle. Ces nervures **80** sont délimitées par trois rainures **81** de largeur **8** mm dont une desdites rainures, rectiligne, est située dans le plan équatorial du pneumatique et les deux autres forment des zigzag de faible amplitude. En outre, quatre incisions **82**, de largeur **2** mm et orientées circonférentiellement sont disposées en alternance dans la direction transversale avec les rainures **81**. Enfin, chaque nervure **80** est pourvue d'une pluralité d'incisions 83 de largeur **1** mm, orientées suivant un angle d'environ **5**° par rapport à la direction transversale, lesdites incisions **83** étant distantes les unes des autres d'un pas moyen de **15** mm. Toutes les incisions ont une profondeur égale à l'épaisseur de la bande c'est à dire **19** mm et les rainures ont une profondeur de **15** mm.

De façon à conférer à cette bande de roulement une rigidité suffisante dans la région affectée par l'écrasement malgré la présence d'un grand nombre d'arêtes sur la surface de roulement, il est réalisé une pluralité de ponts de liaison, entre, d'une part, les parois des incisions circonférentielles et entre, d'autre part, les parois des incisions transversales. Ces ponts de liaison sont obtenus au cours du moulage et de la pré vulcanisation de la bande de roulement du pneumatique dans un moule conforme à l'invention et comportant, outre des éléments moulants pour mouler les rainures **81**, des lamelles pour mouler les incisions et les ponts de liaison dans le même temps.

La partie du moule **84** moulant l'incision transversale **83** est représentée par la coupe **A**-**A**. Sur cette coupe **A**-**A**, représentant le moule en position fermée, ledit moule comportant une première et une deuxième matrice **77, 78**, une lamelle **85** est constituée par l'assemblage par contact de deux lamelles **86** et **87** suivant leurs parois d'extrémité, les géométries desdites parois étant prévues pour former trois orifices **88** de section transversale circulaire de rayon **2.5** mm et pour le passage de la gomme de part et d'autre de la lamelle **85**. Il est en outre prévu, sur une paroi latérale de la lamelle **86**, quatre cavités **89** non débouchantes et sur l'autre lamelle **87** une cavité **99** non débouchante de façon à former des protubérances de gomme liées uniquement à l'une des parois de l'incision moulée par la lamelle **85**. Ces cavités **89** et **99** de section transversale circulaire de rayon **1.25** mm ont pour rôle d'éviter la fermeture de l'incision dans les régions de ladite incision situées au voisinage des ponts de liaison moulés par les orifices **88**.

De manière préférentielle et comme cela est visible sur la coupe **A**-**A**, les orifices **88** sont disposés en alternance sur deux rangées, chaque rangée étant située au voisinage du plan moyen divisant en deux la bande dans le sens de son épaisseur. En outre, il est réservé un espace suffisant entre le fond de l'incision **83** et les points des ponts les plus éloignés de la surface de roulement de façon à permettre une évacuation satisfaisante de liquide par l'incision dans le cas d'un roulage sur sol mouillé; dans le cas d'espèce, il est prévu au moins **5** mm.

La coupe **B-B** montre une coupe du même moule **84** en position fermée, ladite coupe étant réalisée au niveau de la lamelle **90** moulant une incision circonférentielle **82;** ladite lamelle **90** est constituée par la réunion des deux lamelles **91** et **92** en contact suivant leurs parois d'extrémité selon la ligne **93** visible sur cette coupe, les géométries desdites parois étant prévues pour former une pluralité d'orifices **94** pour le passage de la gomme de part et d'autre de la lamelle **90**. Ces orifices **94** ont des sections transversales de forme circulaire et de rayon **2** mm. Ces orifices sont prévus pour mouler des ponts de liaison situés entièrement dans l'épaisseur de la bande, c'est à dire n'apparaissant pas sur l'une ou l'autre des surfaces externes de ladite bande, pour assurer une liaison mécanique efficace entre les nervures voisines.

Une variante à la sculpture présentée consiste à prévoir également dans la rainure médiane la présence de ponts de liaison reliant les parois de ladite rainure.

Avantageusement, la disposition des ponts de gomme assurant la liaison entre deux éléments de sculpture est réalisée de façon à répartir cette liaison dans la profondeur de la découpure pour assurer à la fois une meilleure répartition des rigidités et maintenir une performance satisfaisante de la sculpture avec l'usure de la bande de roulement.

Selon l'invention, la sculpture de la bande de roulement d'un pneumatique présente un grand nombre de découpures, sous forme de rainures et/ou d'incisions, offrant une grande capacité d'évacuation de liquide en cas de roulage sur route mouillée et un grand nombre d'arêtes de gomme en contact avec la route tout en conservant une rigidité suffisante à ladite bande dans la partie affectée par l'écrasement du pneumatique et cela que la sculpture soit neuve ou bien partiellement usée.

Grâce à cette disposition, les mouvements d'ouverture et de fermeture des découpures apparaissant dans la région affectée par l'écrasement du pneumatique sont fortement réduits ce qui est bénéfique sur le plan du transfert des efforts entre la bande de roulement et la route; un grand nombre de ponts de liaison et une répartition appropriée dans l'épaisseur de la bande de roulement sont des facteurs favorables à la réalisation d'une sculpture performante à la fois en adhérence sur sol mouillé et sur sol sec. La présence d'éléments de liaison entre les parois délimitant une même découpure apporte une solution au problème de l'apparition de fissures au fond de ladite découpure. En outre, la réduction des mouvements des éléments de la sculpture les uns par rapport aux autres confère au pneumatique des performances améliorées en usure et en bruit émis par celui-ci en roulage.

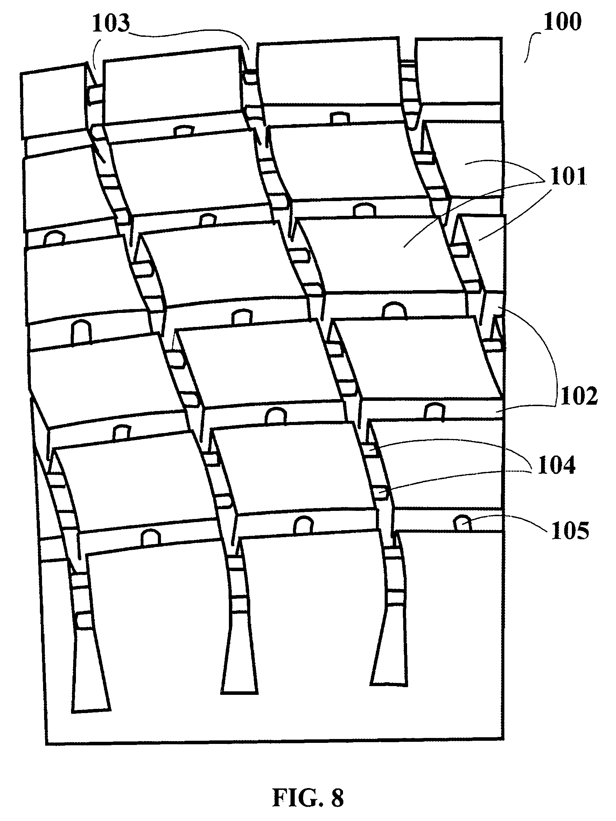

Enfin, la figure **8** montre une variante d'une sculpture d'une bande de roulement **100** pour un pneumatique poids lourd comportant six rangées circonférentielles de blocs de gomme **101**, lesdits blocs **101** étant formés par une pluralité de rainures circonférentielles **102** et transversales **103**. Dans le cas de la sculpture présentée, chaque bloc est relié à ses voisins les plus proches dans le sens circonférentiel par deux ponts de liaison **104** et à ses voisins les plus proches dans le sens transversal par un pont de liaison unique **105**. Ce dernier exemple est donné à titre indicatif des possibilités du procédé selon l'invention, et ne saurait, bien entendu, être interprété comme limitant la portée de ladite invention.

## Revendications

1. Moule (**1**) destiné au moulage d'une bande de gomme, ledit moule comportant une première matrice (**2**) et une deuxième matrice (**3**) pourvues chacune d'une surface de moulage (**4, 5**), lesdites matrices étant destinées, lorsque le moule est en position de fermeture, à délimiter un volume interne de moulage équivalent au volume de la bande de gomme, chaque matrice comportant au moins un élément moulant (**6, 7**) faisant saillie sur la surface de moulage de ladite matrice et destiné à former dans la bande de gomme au moins une découpure, ledit élément moulant étant pourvu de parois latérales (**61, 63, 71, 73**) et de parois d'extrémité (**62, 72**) joignant les parois latérales, ledit moule étant **caractérisé en ce que** dans la position de fermeture du moule (**1**), une paroi d'au moins un élément moulant (**6**) de la première matrice (**2**) est en contact avec une paroi d'un élément moulant (**7**) de la deuxième matrice (**3**) suivant une surface de contact commune auxdits éléments de façon à constituer un élément moulant continu s'étendant de la surface de moulage de la première matrice jusqu'à la surface de moulage de la deuxième matrice pour mouler une découpure traversant entièrement la bande, et **en ce que** les géométries des parois d'extrémité (**62, 72**) desdits éléments moulants sont fonctionnellement adaptées pour former au moins un orifice permettant le passage de la gomme dans ledit orifice pendant le moulage de la bande.

2. Moule selon la revendication **1 caractérisé en ce que** la surface de contact commune entre deux éléments moulants est constituée d'au moins deux surfaces géométriquement séparées et **en ce que** chaque orifice formé pour le passage de la gomme est située entre lesdites deux surfaces de contact.

3. Moule selon la revendication **1** ou la revendication **2 caractérisé en ce que**, ledit moule étant en position fermée, une paroi latérale (**61, 63**) d'un élément moulant (**6**) de la première matrice (**2**) est en contact partiel avec une paroi latérale (**71, 73**) d'un élément moulant (**7**) de la deuxième matrice (**3**) pour former un élément moulant traversant entièrement la bande de gomme.

4. Moule selon la revendication **3 caractérisé en ce que** la surface de contact des éléments moulants fait un angle différent de zéro avec la direction de fermeture du moule.

5. Moule selon la revendication **1** ou la revendication **2 caractérisé en ce que**, ledit moule étant en position fermée, la paroi d'extrémité (**62**) d'un élément moulant (**6**) de la première matrice (**2**) est en contact partiel avec la paroi d'extrémité (**72**) d'un élément moulant (**7**) pour former un élément moulant traversant entièrement la bande de gomme.

6. Moule selon la revendication **5 caractérisé en ce que** la paroi d'extrémité (**45**) de l'un des éléments moulants (**41**) forme une rainure en V et **en ce que** la paroi d'extrémité (**44**) de l'autre élément moulant **40**) en contact avec le premier comporte au moins un biseau prévu pour s'introduire dans la rainure en V du premier élément moulant lorsque le moule est fermé, de façon à assurer un bon contact entre les deux éléments moulants (**40, 41**).

7. Moule selon l'une quelconque des revendications **1** à **6 caractérisé en ce que** les deux matrices composant ledit moule ont des formes générales toriques et concentriques l'une par rapport à l'autre de manière à pouvoir mouler une bande de gomme de forme annulaire.

8. Procédé de fabrication d'une bande de roulement prévulcanisée et prémoulée pour pneumatique, ladite bande de roulement étant pourvue d'une sculpture formée d'éléments de gomme délimités par des découpures réalisées pendant le moulage de ladite bande, au moins une découpure traversant en totalité l'épaisseur de ladite bande comporte au moins un pont de gomme de façon à empêcher l'ouverture et la fermeture de ladite découpure, ledit procédé de fabrication comprenant les étapes suivantes :
- on réalise un moule (**1**) pour mouler une bande en au moins un mélange de caoutchouc, ledit moule comportant deux matrices, une première matrice (**2**) et une deuxième matrice (**3**), chaque matrice du moule comportant une surface de moulage sur laquelle font saillie une pluralité d'éléments moulants destinés à mouler des découpures dans la bande et lesdites surfaces de moulage délimitant, lorsque le moule est fermé, un volume de moulage égal au volume de la bande de gomme à mouler;
- on réalise un élément moulant en deux parties (**6, 7**) pour mouler la découpure traversant en totalité l'épaisseur de la bande de gomme et comportant au moins un pont de liaison en gomme, la première partie (**6**) étant fixée à la première matrice (**2**) du moule et la seconde partie (**7**) étant fixée à la deuxième matrice (**3**) du moule, lesdites parties étant pourvues de parois latérales (**61, 63, 71, 73**) et de parois d'extrémité (**62, 72**) et étant telles qu'en position de moulage, c'est à dire le moule étant fermé, elles sont en contact selon une surface commune pour former l'élément moulant la découpure traversant en totalité la bande de gomme et en ce que les géométries de leurs parois d'extrémité sont fonctionnellement adaptées pour former au moins un orifice dans ledit élément moulant de manière à permettre la formation d'au moins un pont de liaison en gomme pendant le moulage;
- on prépare une quantité appropriée de gomme pour faire une bande de gomme et on place cette quantité entre les deux matrices du moule avant de procéder au moulage de ladite bande par rapprochement desdites deux matrices jusqu'en position de contact des éléments moulant chaque découpure traversant la bande de part en part;
- on vulcanise la bande de gomme;
- on démoule la bande de gomme après vulcanisation en écartant l'une de l'autre les deux matrices de moule entraînant avec elles les éléments moulants qui leurs sont associés.

9. Procédé de fabrication d'une bande de roulement selon la revendication **8 caractérisé en ce que** l'on assemble la bande de gomme pré-moulée et pré-vulcanisée avec une bande de gomme non vulcanisée de façon à obtenir une bande de roulement prête à être posée et collée sur un pneumatique dépourvu de bande de roulement.

10. Procédé de fabrication d'une bande de roulement prévulcanisée selon la revendication **9 caractérisé en ce que** la bande de gomme non vulcanisée est renforcée de manière à réduire les mouvements de gomme pendant la phase de collage sur le pneumatique.

11. Bande de roulement pour pneumatique réalisée par le procédé selon l'une des revendications **8** à **10**.

12. Pneumatique comportant une bande de roulement réalisée par le procédé selon l'une des revendications **8** à **10**.

## Patentansprüche

1. Formwerkzeug (1), das zum Abformen eines Bandes aus Gummi bestimmt ist, wobei das genannte Formwerkzeug eine erste Matrize (2) und eine zweite Matrize (3) aufweist, die jede mit einer Abformoberfläche (4, 5) versehen sind, die genannten Matrizen, wenn sich das Formwerkzeug in der Schließlage befindet, dazu bestimmt sind, das innere Formvolumen zu umgrenzen, das äquivalent dem Volumen des Bandes aus Gummi ist, jede Matrize mindestens ein Abformelement (6, 7) aufweist, das auf der Abformoberfläche der genannten Matrize vorspringt und dazu bestimmt ist, im Band aus Gummi mindestens einen Ausschnitt abzuformen, das genannte Abformelement mit seitlichen Wänden (61, 63, 71, 73) und Endwänden (62, 72) versehen ist und das genannte Formwerkzeug **dadurch gekennzeichnet ist, daß** in der Schließlage des Formwerkzeugs (1) eine Wand mindestens eines Abformelements (6) der ersten Matrize (2) in Berührung mit einer Wand eines Abformelements (7) der zweiten Matrize (3) längs einer Berührungsfläche steht, die den genannten Elementen gemeinsam ist, um auf diese Weise ein durchgehendes Abformelement zu bilden, das sich von der Abformoberfläche der ersten Matrize bis zur Abformoberfläche der der zweiten Matrize erstreckt, um einen Ausschnitt abzuformen, der gänzlich das Band durchsetzt, und daß die Geometrien der Endwände (62, 72) der genannten Abformelemente funktionell dazu eingerichtet sind, mindestens eine Öffnung abzuformen, die den Durchtritt des Gummis in der genannten Öffnung während des Abformens des Bandes gestattet.

2. Formwerkzeug nach Anspruch 1, **dadurch gekennzeichnet, daß** die gemeinsame Berührungsfläche zwischen zwei Abformelementen von mindestens zwei geometrisch getrennten Flächen gebildet ist, und daß jede für den Durchtritt des Gummis gebildete Öffnung zwischen den beiden genannten Berührungsflächen gelegen ist.

3. Formwerkzeug nach Anspruch 1 oder Anspruch 2, **dadurch gekennzeichnet, daß**, wenn sich das genannte Formwerkzeug in geschlossener Lage befindet, eine Seitenwand (61, 63) eines Abformelements (6) der ersten Matrize (2) in teilweiser Berührung mit einer Seitenwand (71, 73) eines Abformelements (7) der zweiten Matrize (3) steht, um ein Abformelement zu bilden, das das Band aus Gummi zur Gänze durchsetzt.

4. Formwerkzeug nach Anspruch 3, **dadurch gekennzeichnet, daß** die Berührungsfläche der Abformelemente zur Schließrichtung des Formwerkzeugs einen Winkel bildet, der von Null unterschiedlich ist.

5. Formwerkzeug nach Anspruch 1 oder Anspruch 2, **dadurch gekennzeichnet, daß**, wenn sich das genannte Formwerkzeug in geschlossener Lage befindet, die Endwand (62) eines Abformelements (6) der ersten Matrize (2) in teilweiser Berührung mit der Endwand (72) eines Abformelements (7) steht, um ein Abformelement zu bilden, das zur Gänze das Band aus Gummi durchsetzt.

6. Formwerkzeug nach Anspruch 5, **dadurch gekennzeichnet, daß** die Endwand (45) des einen der Abformelemente (41) eine V-Rille bildet, und daß die Endwand (44) des anderen Abformelements (40), das mit dem ersten in Berührung steht, mindestens eine Abschrägung aufweist, die dazu vorgesehen ist, um sich in die V-Rille des ersten Abformelements einzulegen, wenn die Form geschlossen ist, um auf diese Weise eine gute Berührung zwischen den beiden Abformelementen (40, 41) sicherzustellen.

7. Formwerkzeug nach irgendeinem der Ansprüche 1 bis 6, **dadurch gekennzeichnet, daß** die beiden Matrizen, die das Formwerkzeug zusammensetzen, insgesamt Torusform haben und zueinander derart konzentrisch sind, daß man ein ringförmiges Band aus Gummi abformen kann.

8. Verfahren zur Herstellung einer vorvulkanisierten und vorgeformten Lauffläche für einen Reifen, wobei die genannte Lauffläche mit einem Profil versehen ist, das aus Gummielementen gebildet ist, die durch Ausschnitte begrenzt sind, die während des Abformens des genannten Bandes hergestellt wurden, wobei mindestens ein Ausschnitt in Gänze die Dicke der genannten Lauffläche durchsetzt und mindestens eine Gummibrücke aufweist, um derart das Öffnen und das Schließen des genannten Ausschnitts zu verhindern, und wobei das genannte Herstellungsverfahren die folgenden Schritte aufweist:
- man stellt ein Formwerkzeug (1) zum Abformen eines Bandes aus mindestens einer Kautschukmischung her, wobei das genannte Formwerkzeug zwei Matrizen aufweist, nämlich einer erste Matrize (2) und eine zweite Matrize (3), von denen jede Matrize des Formwerkzeugs eine Abformfläche aufweist, auf der eine Vielzahl von Abformelementen vorspringt, die dazu bestimmt sind, die Ausschnitte in das Band einzuformen, und die genannten Abformflächen, wenn das Formwerkzeug geschlossen ist, ein Formvolumen umgrenzen, das gleich ist dem Volumen des abzuformenden Bandes aus Gummi;
- man stellt ein Abformelement aus zwei Teilen (6, 7) her, um den Ausschnitt abzuformen, der die Dicke des Bandes aus Gummi zur Gänze durchsetzt und mindestens eine Verbindungsbrücke aus Gummi aufweist, wobei der erste Teil (6) an der ersten Matrize (2) des Formwerkzeugs und der zweite Teil (7) an der zweiten Matrize (3) des Formwerkzeugs befestigt ist, und wobei die genannten Teile mit seitlichen Wänden (61, 63, 71, 73) und Endwänden (62, 72) versehen und so beschaffen sind, daß sie in der Abformungslage, das heißt bei geschlossenem Formwerkzeug, längs einer gemeinsamen Fläche in Berührung stehen, um das Abformelement zu bilden, das den Ausschnitt abformt, der zur Gänze das Gummiband durchsetzt, und daß die Geometrien ihrer Endwände funktionell dazu eingerichtet sind, mindestens eine Öffnung in dem genannten Abformelement derart abzuformen, daß die Bildung mindestens einer Verbindungsbrücke aus Gummi während des Abformens gestattet ist;
- man stellt eine geeignete Menge an Gummi bereit, um ein Gummiband herzustellen, und man verbringt diese Menge zwischen die beiden Matrizen der Form, bevor man mit der Abformung des genannten Bandes durch Annähern der genannten beiden Matrizen bis in die Lage der Berührung der Elemente fortfährt, die jeden Ausschnitt abformen, der das Band durchsetzt;
- man vulkanisiert das Band aus Gummi; und
- man formt das Band aus Gummi nach dem Vulkanisieren aus, indem man die beiden Matrizen des Formwerkzeugs voneinander entfernt, die die Abformelemente mit sich mitnehmen, die ihnen zugeordnet sind.

9. Verfahren zur Herstellung einer Lauffläche nach Anspruch 8, **dadurch gekennzeichnet, daß** man das vorgeformte und vorvulkanisierte Gummiband mit einem nicht-vulkanisierten Gummiband derart zusammenfügt, daß man eine Lauffläche erhält, die dazu bereit ist, auf einen Reifen ohne Lauffläche aufgelegt und aufgeklebt zu werden.

10. Verfahren zur Herstellung einer vorvulkanisierten Lauffläche nach Anspruch 9, **dadurch gekennzeichnet, daß** das nicht-vulkanisierte Band aus Gummi derart verstärkt ist, daß die Bewegungen des Gummis während der Phase des Aufklebens auf den Reifen verringert sind.

11. Lauffläche für einen Reifen, die durch das Verfahren nach einem der Ansprüche 8 bis 10 hergestellt ist.

12. Reifen mit einer Lauffläche, die durch das Verfahren nach einem der Ansprüche 8 bis 10 hergestellt ist.

## Claims

1. A mould (1) intended for moulding a strip of rubber, said mould having a first die (2) and a second die (3) each of which is provided with a moulding surface (4, 5), said dies, when the mould is in the closed position, being intended to delimit an internal moulding volume equivalent to the volume of the strip of rubber, each die having at least one moulding element (6, 7) projecting from the moulding surface of said die and intended to form at least one cutout in the strip of rubber, said moulding element being provided with side walls (61, 63, 71, 73) and end walls (62, 72) joining the side walls, said mould being **characterised in that**, when the mould (1) is in the closed position, a wall of at least one moulding element (6) of the first die (2) is in contact with a wall of a moulding element (7) of the second die (3) along a contact surface common to said elements so as to form a continuous moulding element extending from the moulding surface of the first die to the moulding surface of the second die in order to mould a cutout that passes right through the strip, and **in that** the geometries of the end walls (62, 72) of said moulding elements are functionally adapted to form at least one orifice allowing rubber to pass through said orifice during moulding of the strip.

2. A mould according to Claim 1, **characterised in that** the common contact surface between two moulding elements is formed by at least two geometrically separated surfaces, and **in that** each orifice formed for the passage of the rubber lies between said two contact surfaces.

3. A mould according to Claim 1 or Claim 2, **characterised in that**, with said mould in the closed position, a side wall (61, 63) of a moulding element (6) of the first die (2) is in partial contact with a side wall (71, 73) of a moulding element (7) of the second die (3) in order to form a moulding element that passes right through the strip of rubber.

4. A mould according to Claim 3, **characterised in that** the contact surface of the moulding elements is at an angle other than zero to the direction of closing the mould.

5. A mould according to Claim 1 or Claim 2, **characterised in that**, with said mould in the closed position, the end wall (62) of a moulding element (6) of the first die (2) is in partial contact with the end wall (72) of a moulding element (7) in order to form a moulding element that passes right through the strip of rubber.

6. A mould according to Claim 5, **characterised in that** the end wall (45) of one of the moulding elements (41) forms a V-shaped groove and **in that** the end wall (44) of the other moulding element (40) in contact with the first has at least one chamfer provided in order to be introduced into the V-shaped groove of the first moulding element when the mould is closed, so as to ensure good contact between the two moulding elements (40, 41).

7. A mould according to any one of Claims 1 to 6, **characterised in that** the two dies making up said mould are generally toroidal in shape and are concentric with one another so that a strip of rubber annular in shape can be moulded.

8. A method of manufacturing a prevulcanised and premoulded tread strip for a tyre, said tread strip being provided with a tread pattern formed by rubber elements delimited by cutouts produced during the moulding of said strip, at least one cutout passing right through the thickness of said strip having at least one bridge of rubber so as to prevent said cutout from opening and closing, said method of manufacturing comprising the following steps:
- a mould (1) is made for moulding a strip from at least one rubber compound, said mould having two dies, a first die (2) and a second die (3), each die of the mould having a moulding surface from which there project a plurality of moulding elements which are intended to mould cutouts in the strip and said moulding surfaces, when the mould is closed, delimiting a moulding volume which equals the volume of the strip of rubber to be moulded;
- a moulding element in two parts (6, 7) is made for moulding the cutout which passes right through the thickness of the strip of rubber and which has at least one connecting bridge of rubber, the first part (6) being fixed to the first die (2) of the mould and the second part (7) being fixed to the second die (3) of the mould, said parts being provided with side walls (61, 63, 71, 73) and end walls (62, 72) and being such that in the moulding position, that is to say with the mould closed, they are in contact along a common surface so as to form the element which moulds the cutout that passes right through the strip of rubber, and in that the geometries of their end walls are functionally adapted to form at least one orifice in said moulding element so as to allow at least one connecting bridge of rubber to be formed during moulding;
- an appropriate amount of rubber to make a strip of rubber is prepared and this amount is placed between the two dies of the mould before said strip is moulded by bringing said two dies together until the elements which mould each cutout that passes through the strip from one side to the other come into a position of contact;
- the strip of rubber is vulcanised; and
- the strip of rubber is released from the mould after vulcanisation by parting from one another the two moulding dies, which take with them the moulding elements associated therewith.

9. A method of manufacturing a tread strip according to Claim 8, **characterised in that** the premoulded and prevulcanised strip of rubber is assembled with a strip of unvulcanised rubber so as to obtain a tread strip which is ready to be placed on and stuck to a tyre which is not provided with a tread strip.

10. A method of manufacturing a prevulcanised tread strip according to Claim 9, **characterised in that** the strip of unvulcanised rubber is reinforced so as to reduce the movements of rubber during the phase of sticking it onto the tyre.

11. A tyre tread strip produced using the method according to one of Claims 8 to 10.

12. A tyre having a tread strip produced using the method according to one of Claim 8 to 10.
